(19) Europäisches Patentamt
European Patent Office
Office européen des brevets

(11) Numéro de publication: **0 345 099 B1**

(12) # FASCICULE DE BREVET EUROPEEN

(45) Date de publication de fascicule du brevet: **20.07.94** (51) Int. Cl.$^{5}$: **C08G 12/12**

(21) Numéro de dépôt: **89401049.5**

(22) Date de dépôt: **17.04.89**

Le dossier contient des informations techniques présentées postérieurement au dépôt de la demande et ne figurant pas dans le présent fascicule.

(54) **Nouveau procédé de fabrication de résines urée-formol.**

(30) Priorité: **29.04.88 FR 8805746**

(43) Date de publication de la demande:
**06.12.89 Bulletin 89/49**

(45) Mention de la délivrance du brevet:
**20.07.94 Bulletin 94/29**

(84) Etats contractants désignés:
**AT BE CH DE ES FR GB GR IT LI LU NL SE**

(56) Documents cités:
**EP-A- 0 201 386**
**EP-A- 0 202 976**
**FR-A- 827 059**

**CHEMICAL ABSTRACTS, vol. 85, no. 26, 26 décembre 1976, page 32, résumé 193563x,Columbus, Ohio, US;**

**CHEMICAL ABSTRACTS, vol. 76, no.8, 21 février 1972, page 23, résumé no. 34886c,Columbus, Ohio, US; & JP-A-71 28 785**

(73) Titulaire: **ELF ATOCHEM S.A.**
**4 & 8, Cours Michelet**
**La Défense 10**
**F-92800 Puteaux(FR)**

(72) Inventeur: **Garrigue, Roger**
**23, rue du Capitaine Escudié**
**F-31000 Toulouse(FR)**
Inventeur: **Lalo, Jack**
**116, avenue St Exupéry**
**F-31400 Toulouse(FR)**

(74) Mandataire: **Rochet, Michel et al**
**ELF ATOCHEM S.A.**
**Département Propriété Industrielle**
**4-8, Cours Michelet**
**La Défense 10 - Cedex 42**
**F-92091 Paris-La-Défense (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

La présente invention concerne un nouveau procédé de fabrication de résines aminoplastes. Elle a plus particulièrement pour objet un procédé de fabrication de résines urée-formol contenant des dérivés acryliques de l'urée.

Les résines aminoplastes sont des produits connus qui sont utilisées largement dans l'industrie du bois pour la fabrication en particulier de panneaux de particules. Les résines aminoplastes le plus couramment utilisée sont les résines urée-formol. Elles sont fabriquées de façon connue par condensation d'urée et de formol à pH compris entre 4 et 7 et à une température voisine de l'ébullition : de préférence cette réaction de condensation est réalisée en plusieurs étapes.

Le principal inconvénient des résines urée-formol est de provoquer des émanations élevées de formol libre. On a essayé de réduire le taux de formol libre en mettant en oeuvre divers procédés de fabrication : malheureusement lorsqu'on veut atteindre des taux de formol particulièrement bas, l'expérience montre que cet objectif s'accompagne à la fois d'une diminution de la réactivité et de la stabilité des résines ainsi que d'une dégradation des propriétés mécaniques des panneaux finis. On a aussi proposé pour supprimer le formol libre, d'utiliser des résines dépourvues de formol en particulier des résines à base de solutions d'isocyanate. Malheureusement le problème du formol est remplacé par celui des isocyanates dont l'action sur l'homme est plus néfaste et plus durable que ne l'est le formol jusqu'on a mis en évidence la présence de groupes isocyanates libres dans les panneaux particules même après plusieurs années de fabrication.

On a aussi proposé de rajouter de la mélamine lors de la fabrication des résines urée-formol. Malheureusement la mise en oeuvre de la mélamine avec des résines urée-formol classiques ne commence à faire effet qu'à partir de taux pouvant atteindre 20 % et plus, ce qui rend son emploi commercialement rédhibitoire étant donné son prix de revient. On a ainsi proposé d'abaisser le taux de mélamine à des valeurs inférieurs à 10 %. On observe alors une diminution de la réactivité de ces résines ce qui est particulièrement préjudiciable pour le maintient de cadences de fabrication commercialement acceptables. Par ailleurs, même si l'on observe une amélioration des propriétés des panneaux finis concernant leur résistance à l'humidité, cette amélioration n'est encore pas suffisamment acceptable. Il est aussi connu de modifier des résines urée-formol à l'aide des dérivés acryliques. C'est ainsi qu'on a décrit des résines urée-formol modifiés avec de la N-methylolacrylamide (voir C-A- 76 : 34886C, 1972) pour le collage du papier. On connaît aussi (EP-A 202976) des dérivés acryliques fabriqués à partir d'acrylamide de formol et d'urée qui sont utilisés dans des résines urée-formol utilisées pour le collage du bois : de tels composés ne permettant pas une amélioration de toutes les propriétés des produits finis.

Le besoin se fait donc sentir de disposer de résines urée-formol qui tout en présentant de bonne réactivité permettent de fabriquer des panneaux finis possédant à la fois de bonnes caractéristiques mécaniques alliés à des taux d'émanation en formol libre réduits.

La présente invention concerne un nouveau procédé de fabrication de résines urée-formol selon lequel on condense de l'urée et du formol caractérisé en ce qu'on ajoute pendant la synthèse de la résine urée-formol des précondensats d'urée et de formol contenant de la monométhylolacrylamidométhylène urée.

On a en effet trouvé que la mise en oeuvre de tels additifs dans les résines urée-formol conduisait à des résines présentant une réactivité suffisante, et permettait de fabriquer des panneaux de bois présentant de bonnes caractéristiques mécaniques en particulier une bonne résistance à l'humidité tout en fournissant des émanations en formol libre réduites.

Le procédé de la présente demande consiste à ajouter lors de la synthèse de la résines urée-formol des additifs constitués de formurée contenant de la monométhylolacrylamdoéthylène urée.

Ces additifs sont des produits nouveaux qui font l'objet d'une nouvelle demande de brevet déposée ce jour par la Demanderesse et intitulée "Nouveaux additifs convenant dans les résines aminoplastes". Ces additifs peuvent être préparés selon deux modes opératoires. Selon le premier mode opératoire on fait réair de l'acrylamidométhylène urée avec du formol. Selon le second mode opératoire on ajoute de l'acrylamidométhylène urée à un précondensat urée-formol.

Selon le procédé de la présente demande on ajoute lors de la synthèse des résines urée-formol des additifs constitués de formurée contenant de la monométhylolacrylamidométhylène-urée. Selon l'invention les quantités d'additifs sont telles que le pourcentage de précondensat urée-formol contenant du monométhylolacrylamidométhylène-urée dans la résine soit compris entre 16 à 32 % en poids exprimé par rapport au poids de la solution de résine.

Les additifs consistant de formurée contenant de la monométhylolacrylamidométhylène-urée sont mis en oeuvre dans les résines urée-formol lors de la synthèse de ces résines. Ces résines urée-formol sont des résines classiques qui présentent un rapport molaire $\frac{F}{U}$ compris entre 0,8 et 2. La mise en oeuvre de ces résines ainsi modifiées permet de fabriquer des matériaux à base de bois : panneaux de particules ou

contre-plaqué présentant de bonnes caractéristiques physico-chimiques. Les exemples suivants illustrent la présente invention.

Exemple 1

a) Préparation de formurée contenant de la monométhylolacrylamidométhylène-urée selon le mode opératoire décrit dans la demande intitulée : "Nouveaux additifs convenant pour la fabrication d'aminoplastes".

On introduit dans un réacteur 60 g d'acrylamidométhylène-urée, 120 mg d'éther méthylique de l'hydroquinone à une solution de 349,8 g de formurée (49,02 % de formol, 20,13 d'urée). Le pH du milieu réactionnel est de 7,5, la température est maintenue à 70 ° C jusqu'à dissolution de l'acrylamidométhylène-urée, ce qui nécessite 30 minutes.

b) Préparation de la résine modifiée

Dans un réacteur on introduit 723,95 g d'un précondensat urée-formol (formol 49,02 %, urée 20,13 %) 133,6 g d'eau et 192,25 g d'urée.

Le milieu réactionnel est chauffé 20 minutes à reflux, à pH égal à 7 par addition de soude. On ramène ensuite le pH à 5 par addition d'une solution d'acide formique à 10 %.

Le pH est ensuite ajusté à 7 par addition d'une solution de soude, le milieu réactionnel étant maintenu à 80 ° C. On ajoute ensuite les 409,8 g de formurée modifiée par la monométhylolacrylamidométhylène-urée que l'on a préparé ci-dessus, puis 47,5 g d'eau.

On élimine 69,15 g d'eau par distillation sous vide. On ajoute ensuite 562,5 g d'urée à une température de 40 ° C et 0 pH = 9,2.

La résine finale obtenue contient 20 % de précondensat urée-formol contenant de la monométhylolacrylamidométhylène-urée.

Les caractéristiques de la résine obtenue sont résumées dans la tableau 1. Dans ce tableau on indique les caractéristiques des panneaux fabriqués avec cette résine. A titre de comparaison on a fabriqué des panneaux avec une résine urée-formol contenant 3 % de mélamine, et avec une résine urée-formol classique. Les trois résines utilisées ont toutes le même rapport

$$\frac{F}{NH_2} .$$

Les panneaux ont été réalisés dans les conditions suivantes :

| | | |
|---|---|---|
| - Encollage<br>- Epaisseur panneau | 7 % résine sèche / copeaux secs<br>16 mm | |
| - Pressage | Pression<br>Température<br>Temps pression constante | 30 daN $cm^2$<br>180 ° C<br>4 minutes |

Les caractéristiques des panneaux ont été déterminés selon les normes suivantes :

| | |
|---|---|
| - Teneur en formol (perforateur) | Norme EN 120 |
| - Epaisseur, masse volumique | Norme NFB 51 222 |
| - Traction V 20 | Norme NFB 51 250 |
| - Gonflement (%) | Norme NFB 51 252 |

Exemple 2

On fabrique de la formurée contenant de la monométhylolacrylamidométhylène-urée selon le mode opératoire de l'exemple 1 en utilisant 50 g d'acrylamidométhylène-urée et 188 g de formurée (formol 48,8 %, urée 20, 13 %) : on obtient 238 g de formurée modifiée.

Dans un réacteur on ajoute 330,4 g de formurée (formol : 48,8 %, urée : 20,35 %) 60,2 g d'eau et 86,3 g d'urée.

Le milieu réactionnel est chauffé à reflux pendant 20 minutes, le pH étant maintenu à la valeur de 7, par addition d'une solution de soude. On ramène ensuite le pH à une valeur voisine de 5 par addition d'une solution d'acide formique.

Après avoir ajusté le pH par une solution de soude à environ 7 et chauffé le mélange réactionnel, on ajoute les 238 g de solution de formurée modifiée par la monométhylolacrylamidométhylène-urée préparées ci-dessus. On ajoute ensuite 35 g d'eau. On élimine ensuite 19,4 g d'eau par distillation sous vide puis on ajoute 270 g d'urée à pH = 9,2 et à une température de 40 ° C.

La résine finale obtenue contient 24 % de formurée modifiée par du monométhylolacrylamidométhylène-urée.

Le tableau 2 résume les caractéristiques de la résine, ainsi que celles des panneaux fabriqués avec cette résine. A titre de comparaison on indique les caractéristiques d'une résine urée-formol et les propriétés des panneaux.

TABLEAU 1

| Résines | Résine urée formol modifiée de l'exemple 1 | Résine urée formol modifiée avec 3 % de mélamine | Résine urée-formol non modifiée |
|---|---|---|---|
| F/NH₂ | 0,535 | 0,535 | 0,535 |
| viscosité mPa.s | 280 | 720 | 360 |
| extrait sec % | 65,7 | 65 | 64,4 |
| temps de gel à 80 °C (secondes) | 145 | 540 | 155 |
| tolérance à l'eau à 20 °C | 5/1 | 1,25/1 | |
| Mélanges collants | ////////////////// | ////////////////// | ////////////////// |
| viscosité mPa.s | 76 | 80 | 60 |
| temps de gel à 100 °C (secondes) | 80 | - | 80 |
| Panneaux | ////////////////// | ////////////////// | ////////////////// |
| gonflement 24 h eau froide (%) | 13,6 | 14,9 | 15,7 |
| absorption % (pour masse volumique de 600 kg/m³) | 65,6 | 67,5 | 66,5 |
| traction N/mm² | 0,57 | 0,54 | 0,57 |
| Formol perforateur mg/100 g (iode) | 8,3 | 8,1 | 7,6 |
| humidité % | 6,5 | 6,9 | 6,5 |

TABLEAU 2

| Résines | Résine urée formol de l'exemple 2 | Résine urée formol non modifiée |
|---|---|---|
| F/$NH_2$ | 0,535 | 0,535 |
| viscosité mPa.s | 180 | 360 |
| extrait sec % | 66 | 64,4 |
| temps de gel à 80 °C (secondes) | 191 | 155 |
| tolérance à l'eau à 20 °C | 4,1/1 | |
| **Mélanges collants** | | |
| viscosité mPa.s | 64 | 60 |
| temps de gel à 100 °C (secondes) | 130 | 50 |
| **Panneaux** | | |
| gonflement 24 h eau froide (%) | 9,6 | 14,3 |
| absorption % (pour masse volumique de 600 kg/$m^3$) | 34,1 | 49,8 |
| traction N/$mm^2$ (pour masse volumique de 650 kg/$m^3$) | 0,67 | 0,6 |
| Formol perforateur mg/100 g (iode) | 11,3 | 10,7 |

## Revendications

1. Nouveau procédé de fabrication de résines urée-formol selon lequel on condense de l'urée et du formol caractérisé en ce qu'on ajoute pendant la synthèse de la résine urée-formol des précondensats d'urée et de formol contenant de la monométhylolacrylamidométhylène urée, la quantité utilisée étant

comprise entre 16 et 32 % en poids par rapport au poids de la solution de résine.

## Claims

1. New process for manufacturing urea/formaldehyde resins, according to which urea and formaldehyde are condensed, characterized in that precondensates of urea and formaldehyde containing monomethylolacrylamidomethyleneurea are added during the synthesis of the urea/formaldehyde resin, the quantity used being between 16 and 32% by weight relative to the weight of the solution of resin.

## Patentansprüche

1. Neues Verfahren zur Herstellung von Harnstoff-Formaldehyd-Harzen, bei dem man Harnstoff und Formaldehyd kondensiert, dadurch gekennzeichnet, daß man während der Synthese des Harnstoff-Formaldehyd-Harzes Vorkondensate von Harnstoff und Formaldehyd, enthaltend Monomethylolacrylamidomethylenharnstoff, zusetzt, wobei die verwendete Menge zwischen 16 und 32 Gew.-%, bezogen auf das Gewicht der Harzlösung, beträgt.